# EUROPEAN PATENT APPLICATION

(11) **EP 4 228 295 A1**
(43) Date of publication of application: **16.08.2023**
(21) Application number: 21877806.6
(22) Date of filing: 16.06.2021
(51) Int. Cl.: H04W 4/50, H04W 48/18, H04W 48/16, H04W 4/08, H04W 60/00

(54) **METHOD AND APPARATUS FOR PROVIDING COMMUNICATION SERVICE IN WIRELESS COMMUNICATION SYSTEM**

(30) Priority: 07.10.2020 KR 20200129523
(71) Applicant: LG ELECTRONICS, INC., Seoul 07336 (KR)
(72) Inventor: CHUN, Sung Duck, Seoul 06772 (KR)
(74) Representative: Maikowski & Ninnemann Patentanwälte Partnerschaft mbB
(86) International application number: PCT/KR2021/007530
(87) International publication number: WO 2022/075551

(57) **Abstract**

For providing a communication service in a wireless communication system, a method of operating a euser equipment (UE) in a wireless communication system includes receiving information on a network supporting a temporary communication service, receiving additional information for the temporary communication service, transmitting a first message for requesting the temporary communication service to the network, receiving a second message for permitting the temporary communication service from the network, and performing, based on the additional information, a connection establishment procedure for the temporary communication service, and the temporary communication may be a communication service based on a temporary subscription that occurs by a request of the first message and expires by ending of the temporary communication service

## Description

### Technical Field

The present disclosure relates to a wireless communication system and, more particularly, to a method and apparatus for providing a communication service in a wireless communication system.

### Background Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### Disclosure

### Technical Problem

The present disclosure relates to a device and apparatus for temporarily providing a communication service in a wireless communication system.

The technical objects to be achieved in the present disclosure are not limited to the above-mentioned technical objects, and other technical objects that are not mentioned may be considered by those skilled in the art through the embodiments described below.

### Technical Solution

As an example of the present disclosure, a method of operating a user equipment (UE) in a wireless communication system includes receiving information on a network supporting a temporary communication service, receiving additional information for the temporary communication service, transmitting a first message for requesting the temporary communication service to the network, receiving a second message for permitting the temporary communication service from the network, and performing, based on the additional information, a connection establishment procedure for the temporary communication service, and the temporary communication may be a communication service based on a temporary subscription that occurs by a request of the first message and expires by ending of the temporary communication service.

As an example of the present disclosure, a method of operating a device providing an access and mobility management function (AMF) in a wireless communication system includes receiving a first message for requesting a temporary communication service from a terminal, identifying that the temporary communication service is permitted for the terminal, transmitting a second message for permitting the temporary communication service to the terminal, and performing a connection establishment procedure for the temporary communication service, and the temporary communication may be a communication service based on a temporary subscription that occurs by a request of the first message and expires by ending of the temporary communication service.

As an example of the present disclosure, a method of operating a device providing a unified data management (UDM) function in a wireless communication system includes receiving a first message for enquiring whether or not a temporary communication service is permitted for a terminal, identifying that the temporary communication service is permitted, and transmitting a second message for notifying permission of the temporary communication service, and the temporary communication may be a communication service based on a temporary subscription that occurs by a request of the terminal and expires by ending of the temporary communication service.

As an example of the present disclosure, a user equipment (UE) in a wireless communication system includes a transceiver and a processor coupled to the transceiver. The processor is configured to receive information on a network supporting a temporary communication service, to receive additional information for the temporary communication service, to transmit a first message for requesting the temporary communication service to the network, to receive a second message for permitting the temporary communication service from the network, and to perform, based on the additional information, a connection establishment procedure for the temporary communication service, and the temporary communication may be a communication service based on a temporary subscription that occurs by a request of the first message and expires by ending of the temporary communication service.

As an example of the present disclosure, a device providing an access and mobility management function (AMF) in a wireless communication system includes a transceiver and a processor coupled to the transceiver. The processor is configured to receive a first message for requesting a temporary communication service from a terminal, to identify to the terminal that the temporary communication service is permitted, to transmit a second message for permitting the temporary communication service to the terminal, and to perform a connection establishment procedure for the temporary communication service, and the temporary communication may be a communication service based on a temporary subscription that occurs by a request of the first message and expires by ending of the temporary communication service.

As an example of the present disclosure, a device providing a unified data management (UDM) function in a wireless communication system includes a transceiver and a processor coupled to the transceiver. The processor is configured to receive a first message for enquiring whether or not a temporary communication service is permitted for a terminal, to identify that the temporary communication service is permitted, and to transmit a second message for notifying permission of the temporary communication service, and the temporary communication may be a communication service based on a temporary subscription that occurs by a request of the terminal and expires by ending of the temporary communication service.

A device may include at least one processor and at least one computer memory that is coupled to the at least one processor and stores an instruction instructing operations, when executed by the at least one processor. The operations control the device to receive information on a network supporting a temporary communication service, to receive additional information for the temporary communication service, to transmit a first message for requesting the temporary communication service to the network, to receive a second message for permitting the temporary communication service from the network, and to perform, based on the additional information, a connection establishment procedure for the temporary communication service, and the temporary communication may be a communication service based on a temporary subscription that occurs by a request of the first message and expires by ending of the temporary communication service.

A non-transitory computer-readable medium storing at least one instruction may include the at least one instruction that is executable by a processor. The at least one instruction controls the device to receive information on a network supporting a temporary communication service, to receive additional information for the temporary communication service, to transmit a first message for requesting the temporary communication service to the network, to receive a second message for permitting the temporary communication service from the network, and to perform, based on the additional information, a connection establishment procedure for the temporary communication service, and the temporary communication may be a communication service based on a temporary subscription that occurs by a request of the first message and expires by ending of the temporary communication service.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.
FIG. 1 illustrates an example of a communication system applicable to the present disclosure.
FIG. 2 illustrates an example of wireless devices applicable to the present disclosure.
FIG. 3 illustarstes an example of a wireless device applicable to the present disclosure.
FIGS. 4A and 4B illustrate an example of protocol stacks in a 3GPP based wireless communication system applicable to the present disclosure.
FIG. 5 illustrates an example of the overall architecture of an NG-RAN applicable to the present disclosure.
FIG. 6 illustrates an interface protocol structure for F1-C applicable to the present disclosure.
FIG. 7 illustrates an example of a general architecture of a 5th generation (5G) system applicable to the present disclosure.
FIG. 8 illustrates an example of a core network applicable to the present disclosure.
FIG. 9 illustrates an example of architecture for implementing the concept of network slicing applicable to the present disclosure.
FIG. 10 illustrates another example of architecture for implementing the concept of network slicing applicable to the present disclosure.
FIG. 11 illustrates a concept of a temporary communication service in a wireless communication system according to an embodiment of the present disclosure.
FIG. 12 illustrates an example of a procedure for providing a temporary communication service in a wireless communication system according to an embodiment of the present disclosure.
FIG. 13 illustrates an example of a procedure for using a temporary communication service in a wireless communication system according to an embodiment of the present disclosure.
FIG. 14 illustrates an example of a procedure for providing a temporary communication service in a wireless communication system according to an embodiment of the present disclosure.
FIG. 15 illustrates an example of a procedure for managing a temporary communication service in a wireless communication system according to an embodiment of the present disclosure.

### Mode for Invention

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5GNR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

### Communication system applicable to the present disclosure

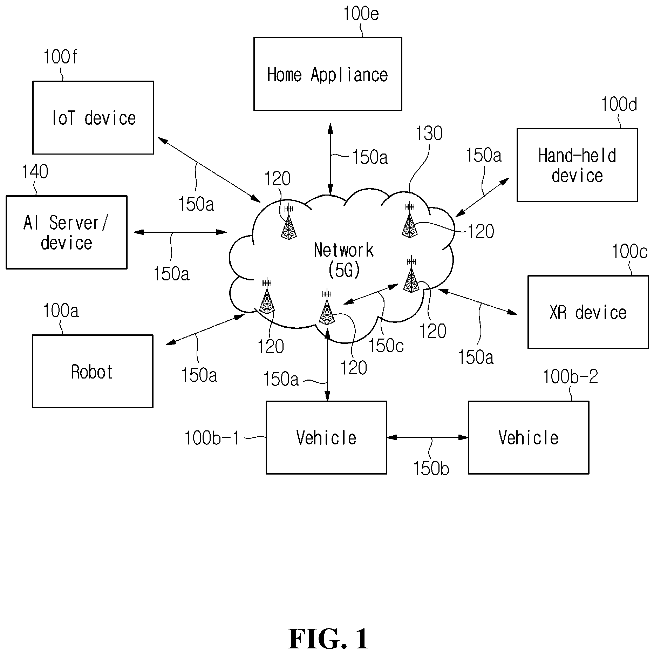

FIG. 1 illustrates an example of a communication system applicable to the present disclosure.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system includes wireless devices 110a to 110f, base stations (BSs) 120, and a network 130. Although FIG. 1 illustrates a 5G network as an example of the network of the communication system 1, the implementations of the present disclosure are not limited to the 5G system, and can be applied to the future communication system beyond the 5G system.

The BSs 120 and the network 130 may be implemented as wireless devices and a specific wireless device may operate as a BS/network node with respect to other wireless devices.

The wireless devices 110a to 110f represent devices performing communication using radio access technology (RAT) (e.g., 5G new RAT (NR)) or LTE) and may be referred to as communication/radio/SG devices. The wireless devices 110a to 110f may include, without being limited to, a robot 110a, vehicles 110b-1 and 110b-2, an extended reality (XR) device 110c, a hand-held device 110d, a home appliance 110e, an IoT device 110f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 110a to 110f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 110a to 110f may be connected to the network 130 via the BSs 120. An AI technology may be applied to the wireless devices 110a to 110f and the wireless devices 110a to 110f may be connected to the AI server 400 via the network 130. The network 130 may be configured using a 3G network, a 4G (e.g., LTE) network, a 5G (e.g., NR) network, and a beyond-5G network. Although the wireless devices 110a to 110f may communicate with each other through the BSs 120/network 130, the wireless devices 110a to 110f may perform direct communication (e.g., sidelink communication) with each other without passing through the BSs 120/network 130. For example, the vehicles 110b-1 and 110b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 110a to 110f.

Wireless communication/connections 150a, 150b and 150c may be established between the wireless devices 110a to 110f and/or between wireless device 110a to 110f and BS 120 and/or between BSs 120. Herein, the wireless communication/connections may be established through various RATs (e.g., 5GNR) such as uplink/downlink communication 150a, sidelink communication (or device-to-device (D2D) communication) 150b, inter-base station communication 150c (e.g., relay, integrated access and backhaul (IAB)), etc. The wireless devices 110a to 110f and the BSs 120/the wireless devices 110a to 110f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

### RADIO RESOURCE STRUCTURE

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

An NR frequency band may be defined as two different types (FR1 and FR2) of frequency ranges. The values of the frequency ranges may be changed (or varied), and, for example, frequency ranges corresponding to the FR1 and FR2 may be 450MHz-6000MHz and 24250MHz-52600MHz, respectively. Further, supportable SCSs is 15, 30 and 60kHz for the FR1 and 60, 120, 240kHz for the FR2. Among the frequency ranges that are used in an NR system, FR1 may mean a "sub 6 GHz range", and FR2 may mean an "above 6 GHz range" and may also be referred to as a millimeter wave (mmW).

As described above, the values of the frequency ranges in the NR system may be changed (or varied). For example, comparing to examples for the frequency ranges described above, FR1 may be defined to include a band within a range of 410 MHz to 7125 MHz. More specifically, FR1 may include a frequency band of 6 GHz (or 5850, 5900, 5925 MHz, and so on) and higher. For example, a frequency band of 6 GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

### Device applicable to the present disclosure

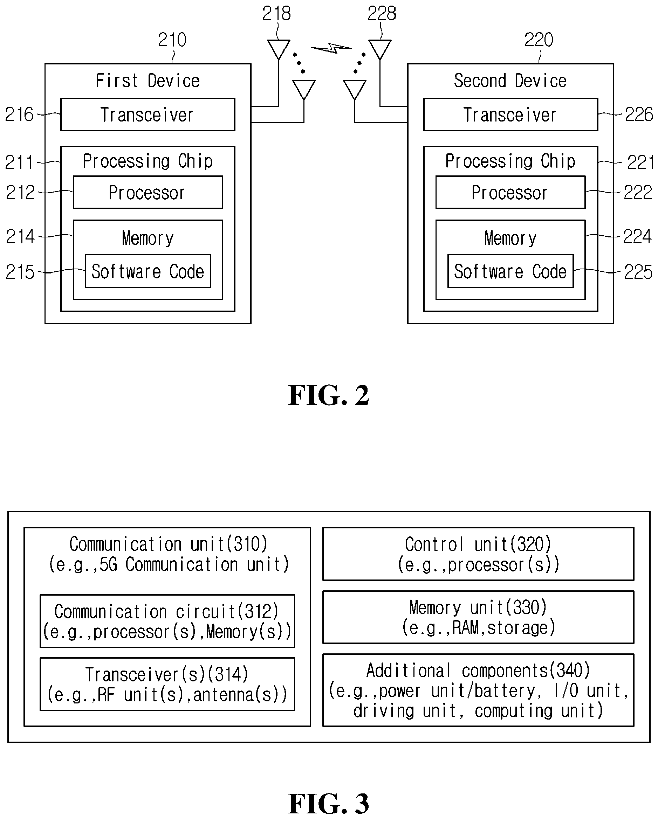

FIG. 2 illustrates an example of wireless devices applicable to the present disclosure.

Referring to FIG. 2, a first wireless device 210 and a second wireless device 220 may transmit/receive radio signals to/from an external device through a variety of RATs (e.g., LTE and NR).

In FIG. 2, {the first wireless device 210 and the second wireless device 220} may correspond to at least one of {the wireless device 110a to 110f and the BS 220}, {the wireless device 110a to 110f and the wireless device 110a to 110f} and/or {the BS 220 and the BS 220} of FIG. 1.

The first wireless device 210 may include at least one transceiver, such as a transceiver 216, at least one processing chip, such as a processing chip 211, and/or one or more antennas 218.

The processing chip 211 may include at least one processor, such a processor 212, and at least one memory, such as a memory 214. It is exemplarily shown in FIG. 2 that the memory 214 is included in the processing chip 211. Additional and/or alternatively, the memory 214 may be placed outside of the processing chip 211.

The processor 212 may control the memory 214 and/or the transceiver 216 and may be configured to implement the descriptions, functions, procedures, suggestions, methods and/or operational flowcharts described in the present disclosure. For example, the processor 212 may process information within the memory 214 to generate first information/signals and then transmit radio signals including the first information/signals through the transceiver 216. The processor 212 may receive radio signals including second information/signals through the transceiver 216 and then store information obtained by processing the second information/signals in the memory 214.

The memory 214 may be operably connectable to the processor 212. The memory 214 may store various types of information and/or instructions. The memory 214 may store a software code 215 which implements instructions that, when executed by the processor 212, perform the descriptions, functions, procedures, suggestions, methods and/or operational flowcharts disclosed in the present disclosure. For example, the software code 215 may implement instructions that, when executed by the processor 212, perform the descriptions, functions, procedures, suggestions, methods and/or operational flowcharts disclosed in the present disclosure. For example, the software code 215 may control the processor 212 to perform one or more protocols. For example, the software code 215 may control the processor 212 to perform one or more layers of the radio interface protocol.

Herein, the processor 212 and the memory 214 may be a part of a communication modem/circuit/chip designed to implement RAT (e.g., LTE or NR). The transceiver 216 may be connected to the processor 212 and transmit and/or receive radio signals through one or more antennas 218. Each of the transceiver 216 may include a transmitter and/or a receiver. The transceiver 216 may be interchangeably used with radio frequency (RF) unit(s). In the present disclosure, the first wireless device 210 may represent a communication modem/circuit/chip.

The second wireless device 220 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 216 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 220 may represent a communication modem/circuit/chip.

Hereinafter, hardware elements of the wireless devices 210 and 220 will be described more specifically. One or more protocol layers may be implemented by, without being limited to, one or more processors 212 and 202. For example, the one or more processors 212 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 212 and 202 may generate one or more protocol data units (PDUs) and/or one or more service data unit (SDUs) according to the descriptions, functions, procedures, suggestions, methods and/or operational flowcharts disclosed in the present disclosure. The one or more processors 212 and 202 may generate messages, control information, data, or information according to the descriptions, functions, procedures, suggestions, methods and/or operational flowcharts disclosed in the present disclosure. The one or more processors 212 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 216 and 206. The one or more processors 212 and 202 may receive the signals (e.g., baseband signals) from the one or more transceivers 216 and 206 and acquire the PDUs, SDUs, messages, control information, data, or information according to the descriptions, functions, procedures, suggestions, methods and/or operational flowcharts disclosed in the present disclosure.

The one or more processors 212 and 202 may be referred to as controllers, microcontrollers, microprocessors, or microcomputers. The one or more processors 212 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 212 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 212 and 202 or stored in the one or more memories 214 and 204 so as to be driven by the one or more processors 212 and 202. The descriptions, functions, procedures, suggestions, methods and/or operational flowcharts disclosed in the present disclosure may be implemented using firmware or software in the form of code, commands, and/or a set of commands.

The one or more memories 214 and 204 may be connected to the one or more processors 212 and 202 and store various types of data, signals, messages, information, programs, code, instructions, and/or commands. The one or more memories 214 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 214 and 204 may be located at the interior and/or exterior of the one or more processors 212 and 202. The one or more memories 214 and 204 may be connected to the one or more processors 212 and 202 through various technologies such as wired or wireless connection.

The one or more transceivers 216 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 216 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 216 and 206 may be connected to the one or more processors 212 and 202 and transmit and receive radio signals. For example, the one or more processors 212 and 202 may perform control so that the one or more transceivers 216 and 206 may transmit user data, control information, or radio signals to one or more other devices. The one or more processors 212 and 202 may perform control so that the one or more transceivers 216 and 206 may receive user data, control information, or radio signals from one or more other devices.

The one or more transceivers 216 and 206 may be connected to the one or more antennas 218 and 208 and the one or more transceivers 216 and 206 may be configured to transmit and receive user data, control information, and/or radio signals/channels, mentioned in the descriptions, functions, procedures, suggestions, methods and/or operational flowcharts disclosed in the present disclosure, through the one or more antennas 218 and 208. In the present disclosure, the one or more antennas 218 and 208 may be a plurality of physical antennas or a plurality of logical antennas (e.g., antenna ports).

The one or more transceivers 216 and 206 may convert received user data, control information, radio signals/channels, etc., from RF band signals into baseband signals in order to process received user data, control information, radio signals/channels, etc., using the one or more processors 212 and 202. The one or more transceivers 216 and 206 may convert the user data, control information, radio signals/channels, etc., processed using the one or more processors 212 and 202 from the base band signals into the RF band signals. To this end, the one or more transceivers 216 and 206 may include (analog) oscillators and/or filters. For example, the one or more transceivers 216 and 206 can up-convert OFDM baseband signals to OFDM signals by their (analog) oscillators and/or filters under the control of the one or more processors 212 and 202 and transmit the up-converted OFDM signals at the carrier frequency. The one or more transceivers 216 and 206 may receive OFDM signals at a carrier frequency and down-convert the OFDM signals into OFDM baseband signals by their (analog) oscillators and/or filters under the control of the one or more processors 212 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 210 acts as the UE, and the second wireless device 220 acts as the BS. For example, the processor(s) 212 connected to, mounted on or launched in the first wireless device 210 may be configured to perform the UE behavior according to an implementation of the present disclosure or control the transceiver(s) 216 to perform the UE behavior according to an implementation of the present disclosure. The processor(s) 202 connected to, mounted on or launched in the second wireless device 220 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

FIG. 3 illustarstes an example of a wireless device applicable to the present disclosure.

The wireless device may be implemented in various forms according to a use-case/service (refer to FIG. 1).

Referring to FIG. 3, wireless devices may correspond to the wireless devices of FIG. 2 and may be configured by various elements, components, units/portions, and/or modules. For example, each of the wireless devices may include a communication unit 310, a control unit 320, a memory unit 330, and additional components 340. The communication unit 310 may include a communication circuit 312 and transceiver(s) 314. For example, the communication circuit 312 may include the one or more processors 302 and 202 of FIG. 2 and/or the one or more memories 304 and 204 of FIG. 2. For example, the transceiver(s) 314 may include the one or more transceivers 106 and 206 of FIG. 2 and/or the one or more antennas 108 and 208 of FIG. 2. The control unit 320 is electrically connected to the communication unit 310, the memory unit 330, and the additional components 340 and controls overall operation of each of the wireless devices. For example, the control unit 320 may control an electric/mechanical operation of each of the wireless devices based on programs/code/commands/information stored in the memory unit 330. The control unit 320 may transmit the information stored in the memory unit 330 to the exterior (e.g., other communication devices) via the communication unit 310 through a wireless/wired interface or store, in the memory unit 330, information received through the wireless/wired interface from the exterior (e.g., other communication devices) via the communication unit 310.

The additional components 340 may be variously configured according to types of the wireless devices. For example, the additional components 340 may include at least one of a power unit/battery, input/output (I/O) unit (e.g., audio I/O port, video I/O port), a driving unit, and a computing unit. The wireless devices may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices may be used in a mobile or fixed place according to a use-example/service.

In FIG. 3, the entirety of the various elements, components, units/portions, and/or modules in the wireless devices may be connected to each other through a wired interface or at least a part thereof may be wirelessly connected through the communication unit 310. For example, in each of the wireless devices, the control unit 320 and the communication unit 310 may be connected by wire and the control unit 320 and first units (e.g., 330 and 340) may be wirelessly connected through the communication unit 310. Each element, component, unit/portion, and/or module within the wireless devices may further include one or more elements. For example, the control unit 320 may be configured by a set of one or more processors. As an example, the control unit 320 may be configured by a set of a communication control processor, an application processor (AP), an electronic control unit (ECU), a graphical processing unit, and a memory control processor. As another example, the memory unit 330 may be configured by a RAM, a DRAM, a ROM, a flash memory, a volatile memory, a non-volatile memory, and/or a combination thereof.

### Protocol applicable to the present disclosure

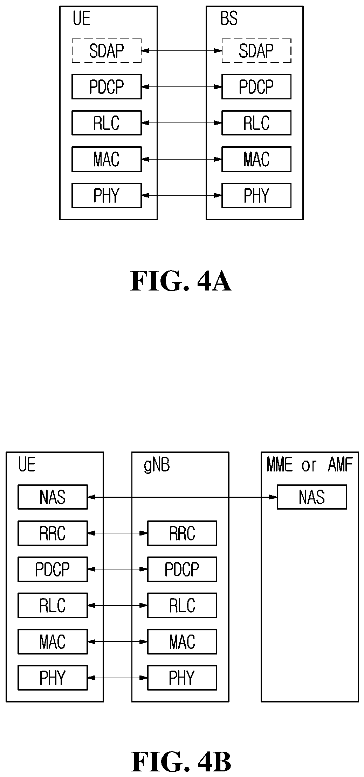

FIGS. 4A and 4B illustrate an example of protocol stacks in a 3GPP based wireless communication system applicable to the present disclosure.

In particular, FIG. 4A illustrates an example of a radio interface user plane protocol stack between a UE and a BS and FIG. 4B illustrates an example of a radio interface control plane protocol stack between a UE and a BS. The control plane refers to a path through which control messages used to manage call by a UE and a network are transported. The user plane refers to a path through which data generated in an application layer, for example, voice data or Internet packet data are transported. Referring to FIG. 4A, the user plane protocol stack may be divided into Layer 1 (i.e., a PHY layer) and Layer 2. Referring to FIG. 4B, the control plane protocol stack may be divided into Layer 1 (i.e., a PHY layer), Layer 2, Layer 3 (e.g., an RRC layer), and a non-access stratum (NAS) layer. Layer 1, Layer 2 and Layer 3 are referred to as an access stratum (AS).

In the 3GPP LTE system, the Layer 2 is split into the following sublayers: MAC, RLC, and PDCP. In the 3GPP NR system, the Layer 2 is split into the following sublayers: MAC, RLC, PDCP and SDAP. The PHY layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers. The SDAP sublayer offers to 5G core network quality of service (QoS) flows.

In the 3GPP NR system, the main services and functions of the MAC sublayer include: mapping between logical channels and transport channels; multiplexing/de-multiplexing of MAC SDUs belonging to one or different logical channels into/from transport blocks (TB) delivered to/from the physical layer on transport channels; scheduling information reporting; error correction through hybrid automatic repeat request (HARQ) (one HARQ entity per cell in case of carrier aggregation (CA)); priority handling between UEs by means of dynamic scheduling; priority handling between logical channels of one UE by means of logical channel prioritization; padding. A single MAC entity may support multiple numerologies, transmission timings and cells. Mapping restrictions in logical channel prioritization control which numerology(ies), cell(s), and transmission timing(s) a logical channel can use.

Different kinds of data transfer services are offered by MAC. To accommodate different kinds of data transfer services, multiple types of logical channels are defined, i.e., each supporting transfer of a particular type of information. Each logical channel type is defined by what type of information is transferred. Logical channels are classified into two groups: control channels and traffic channels. Control channels are used for the transfer of control plane information only, and traffic channels are used for the transfer of user plane information only. Broadcast control channel (BCCH) is a downlink logical channel for broadcasting system control information, paging control channel (PCCH) is a downlink logical channel that transfers paging information, system information change notifications and indications of ongoing public warning service (PWS) broadcasts, common control channel (CCCH) is a logical channel for transmitting control information between UEs and network and used for UEs having no RRC connection with the network, and dedicated control channel (DCCH) is a point-to-point bi-directional logical channel that transmits dedicated control information between a UE and the network and used by UEs having an RRC connection. Dedicated traffic channel (DTCH) is a point-to-point logical channel, dedicated to one UE, for the transfer of user information. A DTCH can exist in both uplink and downlink. In downlink, the following connections between logical channels and transport channels exist: BCCH can be mapped to broadcast channel (BCH); BCCH can be mapped to downlink shared channel (DL-SCH); PCCH can be mapped to paging channel (PCH); CCCH can be mapped to DL-SCH; DCCH can be mapped to DL-SCH; and DTCH can be mapped to DL-SCH. In uplink, the following connections between logical channels and transport channels exist: CCCH can be mapped to uplink shared channel (UL-SCH); DCCH can be mapped to UL-SCH; and DTCH can be mapped to UL-SCH.

The RLC sublayer supports three transmission modes: transparent mode (TM), unacknowledged mode (UM), and acknowledged node (AM). The RLC configuration is per logical channel with no dependency on numerologies and/or transmission durations. In the 3GPP NR system, the main services and functions of the RLC sublayer depend on the transmission mode and include: transfer of upper layer PDUs; sequence numbering independent of the one in PDCP (UM and AM); error correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; protocol error detection (AM only).

In the 3GPP NR system, the main services and functions of the PDCP sublayer for the user plane include: sequence numbering; header compression and decompression using robust header compression (ROHC); transfer of user data; reordering and duplicate detection; in-order delivery; PDCP PDU routing (in case of split bearers); retransmission of PDCP SDUs; ciphering, deciphering and integrity protection; PDCP SDU discard; PDCP re-establishment and data recovery for RLC AM; PDCP status reporting for RLC AM; duplication of PDCP PDUs and duplicate discard indication to lower layers. The main services and functions of the PDCP sublayer for the control plane include: sequence numbering; ciphering, deciphering and integrity protection; transfer of control plane data; reordering and duplicate detection; in-order delivery; duplication of PDCP PDUs and duplicate discard indication to lower layers.

In the 3GPP NR system, the main services and functions of SDAP include: mapping between a QoS flow and a data radio bearer; marking QoS flow ID (QFI) in both DL and UL packets. A single protocol entity of SDAP is configured for each individual PDU session.

In the 3GPP NR system, the main services and functions of the RRC sublayer include: broadcast of system information related to AS and NAS; paging initiated by SGC or NG-RAN; establishment, maintenance and release of an RRC connection between the UE and NG-RAN; security functions including key management; establishment, configuration, maintenance and release of signaling radio bearers (SRBs) and data radio bearers (DRBs); mobility functions (including: handover and context transfer, UE cell selection and reselection and control of cell selection and reselection, inter-RAT mobility); QoS management functions; UE measurement reporting and control of the reporting; detection of and recovery from radio link failure; NAS message transfer to/from NAS from/to UE.

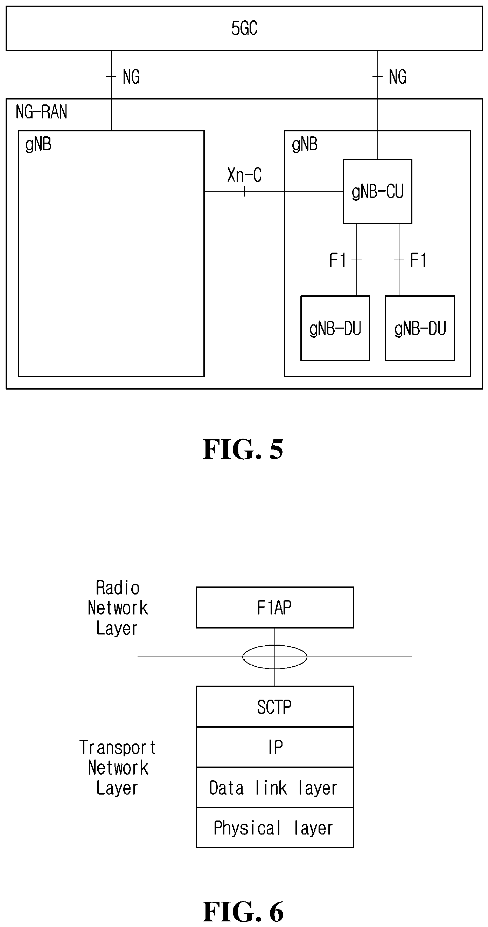

FIG. 5 illustrates an example of the overall architecture of an NG-RAN applicable to the present disclosure.

Referring to FIG. 5, a gNB may include a gNB-CU (hereinafter, gNB-CU may be simply referred to as CU) and at least one gNB-DU (hereinafter, gNB-DU may be simply referred to as DU).

The gNB-CU is a logical node hosting RRC, SDAP and PDCP protocols of the gNB or an RRC and PDCP protocols of the en-gNB. The gNB-CU controls the operation of the at least one gNB-DU.

The gNB-DU is a logical node hosting RLC, MAC, and physical layers of the gNB or the en-gNB. The operation of the gNB-DU is partly controlled by the gNB-CU. One gNB-DU supports one or multiple cells. One cell is supported by only one gNB-DU.

The gNB-CU and gNB-DU are connected via an F1 interface. The gNB-CU terminates the F1 interface connected to the gNB-DU. The gNB-DU terminates the F1 interface connected to the gNB-CU. One gNB-DU is connected to only one gNB-CU. However, the gNB-DU may be connected to multiple gNB-CUs by appropriate implementation. The F1 interface is a logical interface. For NG-RAN, the NG and Xn-C interfaces for a gNB consisting of a gNB-CU and gNB-DUs, terminate in the gNB-CU. For E-UTRAN-NR dual connectivity (EN-DC), the S1-U and X2-C interfaces for a gNB consisting of a gNB-CU and gNB-DUs, terminate in the gNB-CU. The gNB-CU and connected gNB-DUs are only visible to other gNBs and the SGC as a gNB.

Functions of the F1 interface includes F1 control (F1-C) functions as follows.

### (1) F1 interface management function

The error indication function is used by the gNB-DU or gNB-CU to indicate to the gNB-CU or gNB-DU that an error has occurred.

The reset function is used to initialize the peer entity after node setup and after a failure event occurred. This procedure can be used by both the gNB-DU and the gNB-CU.

The F1 setup function allows to exchange application level data needed for the gNB-DU and gNB-CU to interoperate correctly on the F1 interface. The F1 setup is initiated by the gNB-DU.

The gNB-CU configuration update and gNB-DU configuration update functions allow to update application level configuration data needed between gNB-CU and gNB-DU to interoperate correctly over the F1 interface, and may activate or deactivate cells.

The F1 setup and gNB-DU configuration update functions allow to inform the single network slice selection assistance information (S-NSSAI) supported by the gNB-DU.

The F1 resource coordination function is used to transfer information about frequency resource sharing between gNB-CU and gNB-DU.

### (2) System Information management function

Scheduling of system broadcast information is carried out in the gNB-DU. The gNB-DU is responsible for transmitting the system information according to the scheduling parameters available.

The gNB-DU is responsible for the encoding of NR master information block (MIB). In case broadcast of system information block type-1 (SIB1) and other SI messages is needed, the gNB-DU is responsible for the encoding of SIB1 and the gNB-CU is responsible for the encoding of other SI messages.

### (3) F1 UE context management function

The F1 UE context management function supports the establishment and modification of the necessary overall UE context.

The establishment of the F1 UE context is initiated by the gNB-CU and accepted or rejected by the gNB-DU based on admission control criteria (e.g., resource not available).

The modification of the F1 UE context can be initiated by either gNB-CU or gNB-DU. The receiving node can accept or reject the modification. The F1 UE context management function also supports the release of the context previously established in the gNB-DU. The release of the context is triggered by the gNB-CU either directly or following a request received from the gNB-DU. The gNB-CU request the gNB-DU to release the UE Context when the UE enters RRC_IDLE or RRC INACTIVE.

This function can be also used to manage DRBs and SRBs, i.e., establishing, modifying and releasing DRB and SRB resources. The establishment and modification of DRB resources are triggered by the gNB-CU and accepted/rejected by the gNB-DU based on resource reservation information and QoS information to be provided to the gNB-DU. For each DRB to be setup or modified, the S-NSSAI may be provided by gNB-CU to the gNB-DU in the UE context setup procedure and the UE context modification procedure.

The mapping between QoS flows and radio bearers is performed by gNB-CU and the granularity of bearer related management over F1 is radio bearer level. For NG-RAN, the gNB-CU provides an aggregated DRB QoS profile and QoS flow profile to the gNB-DU, and the gNB-DU either accepts the request or rejects it with appropriate cause value. To support packet duplication for intra-gNB-DU carrier aggregation (CA), one data radio bearer should be configured with two GPRS tunneling protocol (GTP)-U tunnels between gNB-CU and a gNB-DU.

With this function, gNB-CU requests the gNB-DU to setup or change of the special cell (SpCell) for the UE, and the gNB-DU either accepts or rejects the request with appropriate cause value.

With this function, the gNB-CU requests the setup of the secondary cell(s) (SCell(s)) at the gNB-DU side, and the gNB-DU accepts all, some or none of the SCell(s) and replies to the gNB-CU. The gNB-CU requests the removal of the SCell(s) for the UE.

### (4) RRC message transfer function

This function allows to transfer RRC messages between gNB-CU and gNB-DU. RRC messages are transferred over F1-C. The gNB-CU is responsible for the encoding of the dedicated RRC message with assistance information provided by gNB-DU.

### (5) Paging function

The gNB-DU is responsible for transmitting the paging information according to the scheduling parameters provided.

The gNB-CU provides paging information to enable the gNB-DU to calculate the exact paging occasion (PO) and paging frame (PF). The gNB-CU determines the paging assignment (PA). The gNB-DU consolidates all the paging records for a particular PO, PF and PA, and encodes the final RRC message and broadcasts the paging message on the respective PO, PF in the PA.

### (6) Warning messages information transfer function

This function allows to cooperate with the warning message transmission procedures over NG interface. The gNB-CU is responsible for encoding the warning related SI message and sending it together with other warning related information for the gNB-DU to broadcast over the radio interface.

FIG. 6 illustrates an interface protocol structure for F1-C applicable to the present disclosure.

A transport network layer (TNL) is based on Internet protocol (IP) transport, comprising a stream control transmission protocol (SCTP) layer on top of the IP layer. An application layer signaling protocol is referred to as an F1 application protocol (E1AP).

### Network nodes applicable to the present disclosure

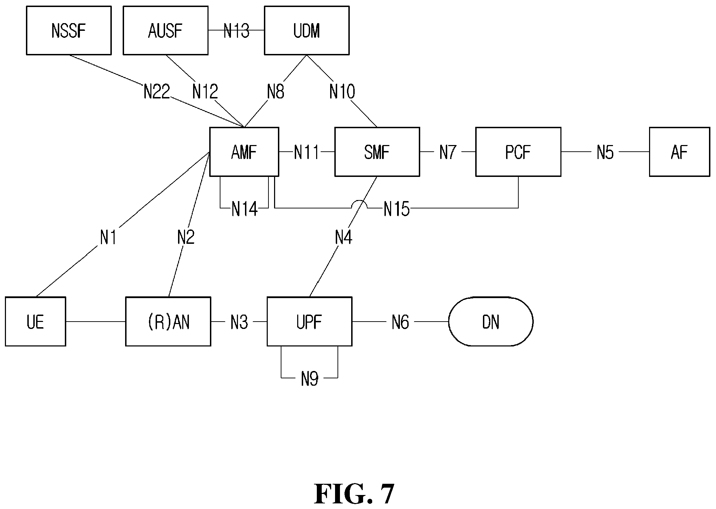

FIG. 7 illustrates an example of a general architecture of a 5th generation (5G) system applicable to the present disclosure.

Access and mobility management function (AMF) supports such functions as signaling between CN nodes for mobility between 3GPP access networks, termination of a radio access network (RAN) CP interface (N2), termination of NAS signaling (N1), registration management (registration area), idle mode UE reachability, support of network slicing, and SMF selection.

Some or all the functions of AMF may be supported in a single instance of one AMF.

Data network (DN) means an operator service, an Internet access or 3rd party service and the like, for example. DN transmits a downlink protocol data unit (PDU) or receives a PDU from a UPF, which UE transmits.

Policy control function (PCF) receives information on a packet flow from an application server and provides a function of determining policies like mobility management and session management.

Session management function (SMF) provides a session management function, and when UE has a plurality of sessions, each session may be managed by different SMFs.

Some or all the functions of SMF may be supported in a single instance of one SMF.

Unified data management (UDM) stores a user's subscription data, policy data and the like.

User plane function (UPF) forwards a downlink PDU, which is received from a DN, to UE via (R)AN and forwards an uplink PDU, which is received from UE, to a DN via (R)AN.

Application function (AF) operates with a 3GPP core network for service provision (e.g., for supporting functions like application effect on traffic routing, network capability exposure access, mutual operation with policy framework for policy control).

(Radio) access network ((R)AN) collectively refers to new radio access networks that support both evolved E-UTRA, which is an evolved version of 4G radio access, and a new radio (NR) access technology (e.g. eNB).

gNB supports functions for wireless resource management (that is, radio bearer control, radio admission control, connection mobility control, dynamic allocation of resources to UE in uplink/downlink (that is, scheduling)).

User equipment (UE) means a user device.

In a 3GPP system, a conception link connecting NFs in a 5G system is defined as a reference point.

N1 means a reference point between UE and AMF, N2 means a reference point between (R)AN and AMF, N3 means a reference point between (R)AN and UPF, N4 means a reference point between SMF and UPF, N6 means a reference point between UPF and a data network, N9 means a reference point between 2 core UPFs, N5 means a reference point between PCF and AF, N7 means a reference point between SMF and PCF, N24 means a reference point between PCF in a visited network and PCF in a home network, N8 means a reference point between UDM and AMF, N10 means a reference point between UDM and SMF, N11 means a reference point between AMF and SMF, N12 means a reference point between AMF and authentication server function (AUSF), N13 means a reference point between UDM and AUSF, N14 means a reference point between 2 AMFs, N15 means a reference point between PCF and AMF in the case of non-roaming scenario and a reference point between PCF in a visited network and AMF in the case of a roaming scenario, N16 means a reference point between 2 SMFs (in a roaming scenario, a reference point between SMF in a visited network and SMF in a home network), N17 means a reference point between AMF and 5G-equipment identify register (EIR), N18 means a reference point between AMF and unstructured data storage function (UDSF), N22 means a reference point between AMF and network slice selection function (NSSF), N23 means a reference point between PCF and network data analytics function (NWDAF), N24 means a reference point between NSSF and NWDAF, N27 means a reference point between network repository function (NRF) in a visited network and NRF in a home network, N31 means a reference point between NSSF in a visited network and NSSF in a home network, N32 means a reference point between security protection proxy (SEPP) in a visited network and SEPP in a home network, N33 means a reference point between network exposure function and AF, N40 means a reference point between SMF and charging function (CHF), and N50 means a reference point between AMF and circuit bearer control function (CBCF).

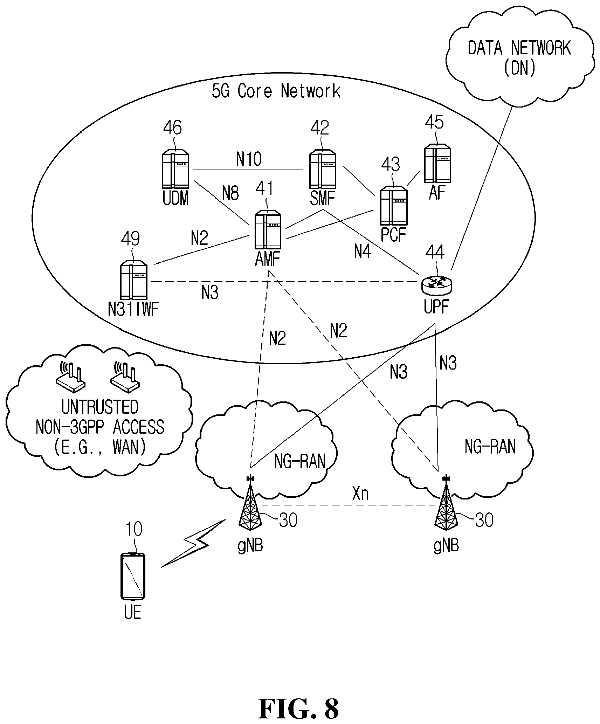

FIG. 8 illustrates an example of a core network applicable to the present disclosure. Referring to FIG. 8, the core network may include various components, and FIG. 8 shows an access and mobility management function (AMF), a session management function (SMF), a policy control function (PCF), and a user plane function (UPF), an application function (AF), a unified data management (UDM), and a non-3GPP interworking function (N3IWF), which are some of the various components. A UE is connected to a data network via a UPF over a Next Generation Radio Access Network (NG-RAN). The UE may also receive data services through untrusted non-3GPP access, e.g., a wireless local area network (WLAN). In order to connect the non-3GPP access to the core network, the N3IWF may be disposed.

### Cell selection/reselection

In a mobile communication system, it is assumed that a terminal continuously moves and, accordingly, in order to maintain a radio period between a terminal and a base station in an optimal state, the terminal continuously performs a cell selection/reselection process. Details are described in standard documents such as 3GPP TS 38.304 16.0.0.

### Network slice

In a 3GPP system, network resources are virtualized for efficient use of network resources, and through this, multiple virtual networks may be constructed, and the virtual networks are referred to as network slices. A network slice is a combination of network nodes that have functions required to provide a specific service. A network node constituting a slice instance may be a node independent in terms of hardware or a logically independent node. Each slice instance may be composed of a combination of all nodes necessary to construct the entire network. In this case, one slice instance may provide a service to a UE alone.

A slice instance may be composed of a combination of some of nodes constituting a network. In this case, the slice instance may provide a service to the UE in association with other existing network nodes, without providing a service to the UE alone. In addition, a plurality of slice instances may provide a service to the UE in association with each other.

A slice instance is different from a dedicated core network in that all network nodes including a core network (CN) node and a RAN may be separated. In addition, a slice instance is simply different from a dedicated core network in that network nodes may be logically separated.

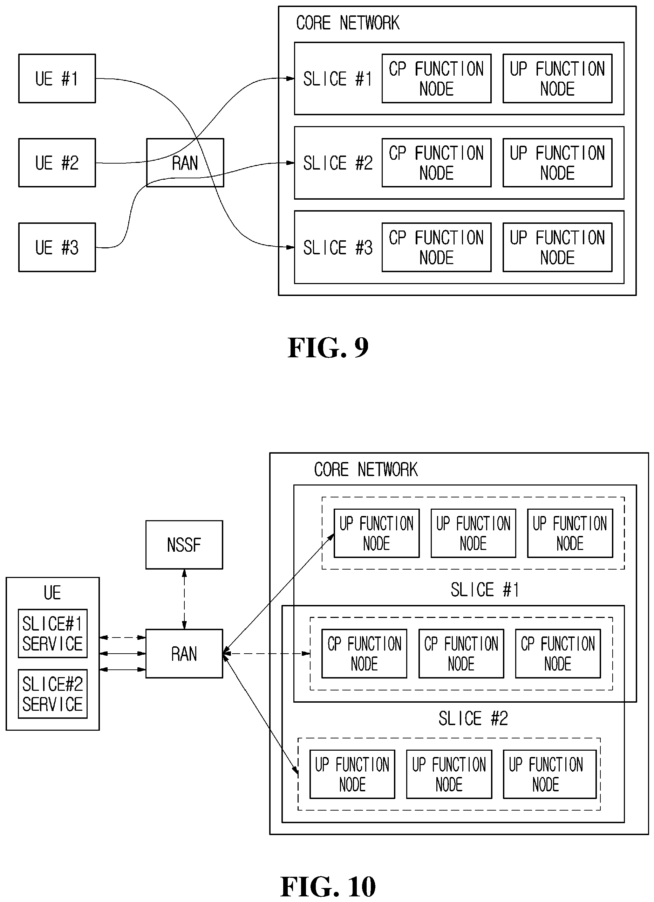

FIG. 9 illustrates an example of architecture for implementing the concept of network slicing applicable to the present disclosure. Referring to FIG. 9, a core network may be divided into several slice instances. Each slice instance may include one or more of a CP function node and an UP function node. Each UE may use a network slice instance suitable for its own service through a RAN. Unlike that shown in FIG. 9, each slice instance may share one or more of a CP function node and an UP function node with other slice instances.

FIG. 10 illustrates another example of architecture for implementing the concept of network slicing applicable to the present disclosure. Referring to FIG. 10, a plurality of UP function nodes are clustered, and a plurality of CP function nodes are clustered. In addition, slice instance #1 in the core network includes a first cluster of UP function nodes. In addition, slice instance #1 shares a cluster of CP function nodes with slice instance #2. Slice instance #2 includes a second cluster of UP functional nodes. NSSF selects a slice or instance that may accommodate the service of the UE. The UE may use service #1 through slice instance #1 selected by NSSF and use service #2 through slice instance #2 selected by NSSF.

As described above, most things may be connected through communication, and more convenient services may be provided. In the case of the existing 2G, 3G, and 4G systems, communication involving people was mainly used. For example, voice calls between people or scenarios in which people directly browse the Internet or use services such as games were common. On the other hand, in the case of a 5G system, the scope of communication has diversified as various types of things are involved. For example, in the case of V2X, vehicles directly exchange information without human intervention. In the case of a smart factory, communication with extremely low-latency transfer characteristics is used for information exchange between machines. On the other hand, in the case of sensors installed in each home, for example, a temperature center, an air quality sensor, etc., a scenario in which data collected intermittently for a very long time is transmitted to a server or the like is applied.

Various network traffics are generated as described above and may be classified into categories such as mIoT, URLLC, eMBB, and V2X. Accordingly, in the structure of NSSAI, which is a network slice identifier, a slice type field called SD has been introduced, and through this, slice types such as mIoT, URLLC, eMBB, and V2X may be currently supported.

As mentioned above, many types of user data with different characteristics are currently being processed. Meanwhile, as the evolution of user devices continues, the user devices may also generate various types of data according to circumstances. For example, in the case of a vehicle, V2X traffic for traffic safety may be requested, but on the other hand, a user riding in a vehicle may consume eMBB traffic such as a video service. As another example, in the case of a general smartphone, users mainly consume audio/video/text media, but, in some cases, for example, if a user loses a smartphone and wants to track the location of the smartphone, traffic with characteristics of mIoT may be generated or used.

In addition, mobile communication services shall guarantee mobility of terminals due to their characteristics. For example, since a user may move to another country carrying a terminal owned by the user or a car may cross a border in the same way, the terminal installed in the car is also moved to another region. This means that each terminal crosses the service area of the mobile communication service operator that originally subscribed to the service, and each mobile communication service operator makes a contract with each other to support roaming services and the like. However, the type or quality of service provided by each mobile communication operator may be different in consideration of various factors such as characteristics of each region, frequency holding status, base station installation status, and performance of network equipment. Accordingly, when each mobile communication service operator makes a roaming contract with another mobile communication service operator, the mobile communication operators mutually determine which service is supported or requested.

### Specific embodiments of the present disclosure

The present disclosure is directed to provide a communication service to a terminal and relates to a technique for providing a temporary communication service only through a simple procedure without general subscription.

Generally, only a mobile network operator with business license provides a communication service by using a frequency band for which the operator secures the license. Since frequencies are limited resources, each country permits specific operators to use a specific frequency through a specific procedure. Thus, by using a permitted frequency, mobile network operators may install wireless base stations operating at the frequency, efficiently manage wireless base stations, and provide a communication service to subscribers.

Meanwhile, mobile communication services have become indispensable to daily life, and users want to use a communication service at any place accordingly. In addition, from the perspective of application service providers, it is important for the service providers to enable users of their applications to have an access anytime anywhere.

Such a trend opens the possibility of new environments and scenarios as follows. For example, an individual person or a small-sized organization may want to install wireless equipment by themselves. Specifically, a shopping mall itself may want to provide a wireless communication service to customers who visit the mall. As another example, residents living in a residential area may want to install a common base station, which is possessed by them and thus does not belong to any specific mobile network operator, on the ground that a jumble of wireless base stations individually installed by each mobile network operator or installing individual pieces of equipment and wired networks related to them can have a deleterious effect on environment. As yet another example, in a country with famous tourist attractions, a mobile network operator running its business may want to provide a competitive communication service to tourists visiting the country.

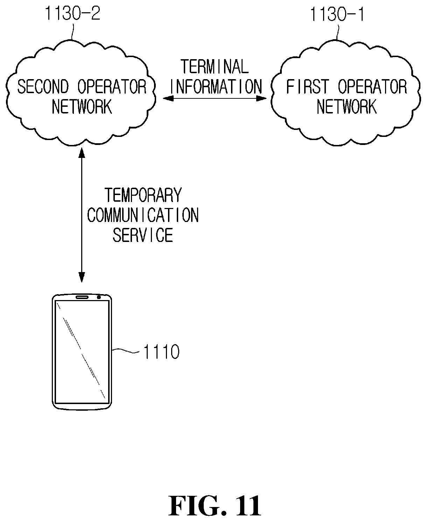

In this regard, the present disclosure proposes a technique for providing a user with a short-term or temporary communication service. A concept of a temporary communication service proposed by the present disclosure is as in FIG. 11 below.

FIG. 11 illustrates a concept of a temporary communication service in a wireless communication system according to an embodiment of the present disclosure. FIG. 11 exemplifies a case in which a terminal 1110 having a first operator network 1130-1 as a home public land mobile network (HPLMN) is provided with a temporary communication service through a second operator network 1130-2.

Referring to FIG. 11, the terminal 1110 has subscribed to the first operator network 1130-1 as HPLMN through a contract with an operator of the first operator network 1130-1. Accordingly, the first operator network 1130-1 possesses subscription information of the terminal 1110. The terminal 1110 leaves a service area of the first operator network 1130-1, enters a service area of the second operator network 1130-2 and then finds the second operator network 1130-2.

In this case, according to a contract between the operators of the first operator network 1130-1 and the second operator network 1130-2, a roaming service may be provided to the terminal 1110. However, according to various embodiments of the present disclosure, not a roaming but temporary communication service may be provided to the terminal 1110. Unlike a roaming service, a temporary communication service does not necessarily require a pre-subscription contract between operators, and it is a service that is charged independently of a subscribed HPLMN and is not controlled by the HPLMN. That is, a temporary communication service is a communication service based on a temporary subscription that occurs by a request of the service and expires the ending of the service. In addition, according to various embodiments, a temporary communication service may provide a separate telephone number from a telephone number used in an HPLMN.

In other words, a temporary communication service means a new type of service, not a service that is provided normally based on a user's subscription contract. On the other hand, a usual communication service may be called a non-temporary communication service. For example, a user may be provided with a voice call service, a short message service (SMS) and a data communication service from a network to which the user has subscribed, and this is a non-temporary communication service. However, in case a user is connected to a network different from a subscribed network, for example, in a roaming situation, a voice call service, an SMS, and a data communication service are usually provided from the network of the roaming situation.

Herein, for example, if the quality or charging of a voice call service, an SMS and a data communication service is the same as when the services are used in a network to which a terminal is subscribed, this may be understood as a non-temporary communication service. Even when the quality or charging of a service is different from that of a subscribed network, if a terminal uses Internet communication through a network which the terminal visits and an Internet service is related to a subscribed service amount in the subscribed network, this is a non-temporary communication service. However, in case a service, which is provided in a network that a terminal visits, is not a service that is usually provided in a subscribed network, but data communication temporarily provided by the network that the terminal visits, based on a separate condition, contract and service parameter between the network and the terminal, this may be understood as a temporary communication service.

Hereinafter, the present disclosure will describe various embodiments associated with a temporary communication service. In the present disclosure, a temporary communication service may be referred to as 'temporary connectivity service', 'temporary on-demand connectivity (TODC) service', `provisional communication service', `non-subscription-based communication service', or by any other terms with the equivalent technical meaning.

In order to support a temporary communication service, a wireless network or each cell belonging to a wireless network may notify a terminal of whether or not the temporary communication service is provided in a network connected to the cell. According to an embodiment, through system information (e.g., system information block (SIB)), each cell may give notice about whether or not a temporary communication service is supported in each network connected to the cell.

According to an embodiment, a terminal may select, according to a user's setting, a network providing a temporary communication service among nearby network(s) that are retrieved, and perform a registration process. For example, a terminal may present a list of retrieved networks to a user and indicate herein whether or not each network supports a temporary communication service.

According to an embodiment, in case a user wants to use a temporary communication service, a terminal may transmit information, which indicates that the user wants to use the temporary communication service, to a network through a registration request message. That is, in case a user selects a specific network supporting a temporary communication service, a terminal transmits a registration request message to the network, requesting the temporary communication service through the registration request message.

According to another embodiment, in a process of establishing a RRC connection, a terminal may use RRC establishment cause information related to a temporary communication service. In this process, to prevent congestion of radio resources, the network may perform access control separately for a request of the temporary communication service. For example, for access for a temporary communication service, a network may configure a separate access category.

According to an embodiment, a network may identify, through a registration request message, that a terminal requests a temporary communication service, and check whether or not the terminal satisfies a condition for using the temporary communication service. For example, the network may check a serial number of the terminal, an identifier of the terminal, and the like. For example, the network may check network information of a communication service to which the terminal has subscribed, based on information stored in a universal subscriber identity module (USIM) of the terminal, and determine, based on a check result, whether or not to provide the temporary communication service to the terminal.

According to an embodiment, a network may transmit additional information related to a temporary communication service to a terminal. The additional information may include necessary information for using the temporary communication service. The additional information may be transmitted through system information (e.g., SIB). The additional information may be referred to as `assist information'.

For example, a network may transmit, to a terminal, information related to a temporary communication service, and additional information related to a data network or a network slice. For example, additional information on a data network name (DNN), a slice and the like, which should be used to be provided with a temporary communication service, may be provided to a terminal.

For example, additional information may include information on a condition for being provided with a temporary communication service or an operation to be performed. Specifically, for which DNN or which slice a terminal should establish a session, to which uniform resource name (URN)/uniform resource identifier (URl) the terminal should be connected and the like may be included in a condition.

For example, additional information may include information on a requirement for being provided with a temporary communication service. Specifically, a requirement may include which specific frequency is used to provide a temporary communication service, and in this case, only a terminal supporting the frequency may use the temporary communication service.

For example, additional information may include information for notifying whether to be capable to provide a non-temporary communication along with a temporary communication service. A user may want to keep using a service that is provided through a carrier to which the user has already subscribed. For example, a user may want to use a telephone number that the user has kept using.

According to an embodiment, after receiving additional information related to a temporary communication service from a network, a terminal may perform a corresponding operation according to a user's selection and a condition identified by the additional information. For example, when additional information on a slice, a DNN and the like is received, a terminal establishes a PDU session associated with a slice or DNN. For example, when access for a specific URN/URI is indicated, a terminal attempts to access an indicated resource after establishing a PDU session. For example, in case a user wishes to keep using a non-temporary communication service but a selected network does not support the non-temporary communication service, a terminal may be disconnected from the network.

According to an embodiment, a network may check validity of a user or a terminal requesting a temporary communication service, and when validity is acknowledged, the network may provide the temporary communication service. For example, a visited network providing a temporary communication service may utilize information related to a home network to which a terminal has subscribed. For example, since a terminal includes a USIM associated with a home network, a visited network may obtain authentication information from the home network by using the USIM and check the validity of the terminal. Validity check may be performed by querying to the home network and receiving a key value from the home network. For example, the validity of a terminal may be checked during a registration procedure to a network.

According to an embodiment, in case a terminal is determined to be valid, a visited network may ask a home network whether it is all right to provide a temporary communication service to the terminal. In case the home network prohibits the provision of the temporary communication service, even if the validity of the terminal is acknowledged, the visited network may refuse to provide the temporary communication service. On the other hand, in case the home network allows the provision of the temporary communication service, the visited network may check the validity of the terminal by using information of the home network and then allows the temporary communication service to be provided to the terminal. Thus, the home network may prevent authentication-related information from being used by a malicious network.

According to an embodiment, in case a terminal wants to use only a temporary communication service without a non-temporary communication service, validity may be determined without authentication information that is provided by a home network. In other words, in case a non-temporary communication service does not need to be provided to a terminal, authentication information provided by a home network does not always need to be used. In this case, a visited network may authenticate the terminal by using separate information that is not associated with the home network. For example, in case access to a specific URI/URN is indicated as a condition for a temporary communication service, a visited network may obtain and authenticate information related to a terminal or a user.

According to an embodiment, in case a network determines to provide a non-temporary communication service to a terminal, a visited network or a home network may inform the terminal of a service or traffic for which the non-temporary service can be used, by providing policy information. Accordingly, the terminal may determine which traffic is to be transmitted or received through which service.

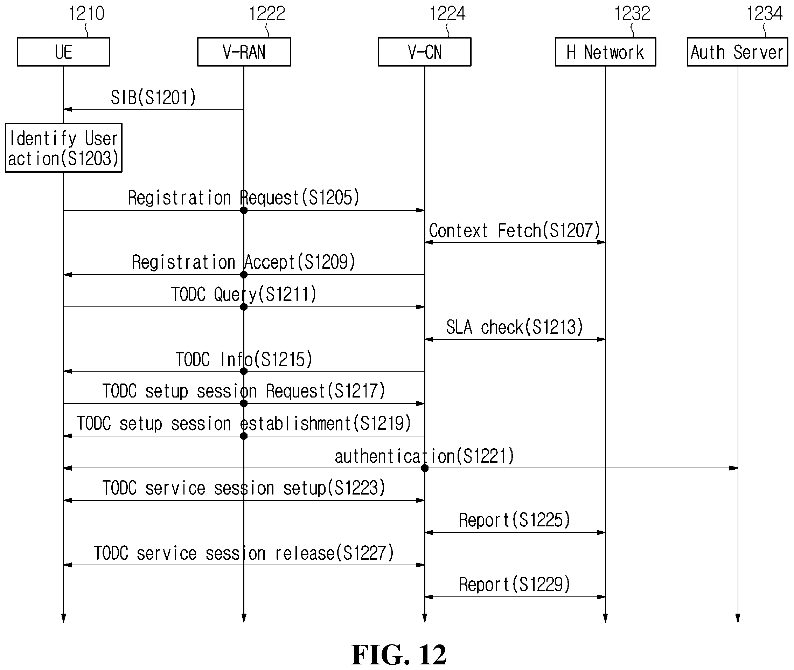

FIG. 12 illustrates an example of a procedure for providing a temporary communication service in a wireless communication system according to an embodiment of the present disclosure. FIG. 12 exemplifies a case in which UE 1210 uses a temporary communication service through a visited network.

Referring to FIG. 12, at steps S1201, the UE 1210 receives an SIB from a visited-radio access network (V-RAN) 1222 (e.g., base station). Thus, UE 1220 may identify that a TODC service is provided in a corresponding operator network. That is, the UE 1210 searches an available network in a corresponding region. Thus, the UE 1210 may identify a network in which the TODC service is provided. In addition, the UE 1210 may obtain additional information for the TODC service through the SIB.

At step S1203, the UE 1210 checks a user's action. Based on a result of step S1201, the UE 1210 shows the user a list of discovered network(s) and whether or not a TODC service is provided in each network. That is, the UE 1210 may notify the user that the TODC service is provided in a discovered network. Accordingly, the user determines to which network access will be attempted. Alternatively, according to another embodiment, in case an automatic network selection mode is set, the UE 1210 may select a network without a user's intervention.

At step S1205, the UE 1210 transmits a registration request message to a V-CN 1224 (e.g., AMF). The registration request message received by the V-CN 1224 through the V-RAN 1222 (e.g., base station). That is, the UE 1210 starts a registration procedure. In case the user wants to use the TODC service, according to an embodiment, the UE 1210 may transmit, through the registration procedure, information notifying a network that the TODC service needs to be provided.

At step S1207, the V-CN 1224 (e.g., AMF) performs a context fetch operation with a home network 1232 (e.g., UDM). That is, in case the UE 1210 is not UE 1210 that subscribes to a network to which the V-CN 1224 belongs and the UE 1210 transmits an identifier, the V-CN 1224 may obtain information on the UE 1210 from a home network of the UE 1210 based on the identifier. Herein, the V-CN 1224 may obtain, from the home network 1232, information indicating whether or not provision of the TODC service is allowed for the UE 1210. Thus, whether or not the provision of the TODC service is allowed may be asked from a visited network to the home network, when a request from the UE 1210 occurs. According to another embodiment, whether or not to provide the TODC service may not be set in each UE but be set in a unit of network. In this case, through a preliminary procedure among networks, a visited network may recognize that the TODC service is allowed for every UE that subscribes to the home network. In this case, the visited network may determine that the TODC service can be provided to the UE 1210, without query to the home network.

At step S1209, in case access to the UE 1210 is allowed, the V-CN 1224 (e.g., AMF) transmits a registration accept message to the UE 1210. According to an embodiment, in case the UE 1210 requests the TODC service, the home network permits provision of the TODC service, and the visited network determines to provide the TODC service to the UE 1210, the V-CN 1224 notifies the permission of the TODC service to the UE 1210 based on a result of context fetch. Additionally, the V-CN 1224 may also transmit at least a part of additional information related to the provision of the TODC service.

In case the UE 1210 does not request the TODC service in an operation (e.g., step S1205) of requesting registration, the UE 1210 may request a network to provide the TODC service at any time after the registration is completed. To this end, at step S1211, the UE 1220 may ask the V-CN 1224 (e.g. AMF) whether or not to provide the TODC service. At step S1213, the V-CN 1224 performs an operation of checking a service level agreement (SLA) with the home network 1232. Herein, the SLA may be associated with whether or not TODC is provided. That is, through the operation of checking SLA, the V-CN 1224 may check whether or not a temporary communication service is permitted to the UE 1210. At step S1215, when the UE 1210 receives a query, the V-CN 1224 may send information related to the TODC service as response to the UE 1210. The information related to the TODC service may include at least one of information indicating whether or not the TODC service is permitted and additional information related to the TODC service. That is, the steps SS1211 to 1215 may be performed when the TODC service is not requested at step S1205.

At step S1207, the UE 1210 transmits a TODC setup session request message to the V-CN 1224 (e.g., AMF). At step S1219, the V-CN 1224 transmits a TODC setup session establishment message to the UE 1210. The UE 1210 performs an operation associated with a configuration of a TODC service, based on information delivered from a network, that is, information for a setup session for data transmission and reception for configuring the TODC service. For example, in case the network provides slice information related to the configuration of the TODC service, or DNN information, the UE 1210 may generate a PDU session based on the provided information.

At step S1221, the V-CN 1224 performs authentication for the UE 1210 by using an authentication server (AUTH server) 1234. The authentication may be performed by a user's traffic exchange or signaling of a control plane, based on slice information or DNN information related to configuration of the TODC service, after the TODC setup session is established. According to an embodiment, the UE 1210 may access a captive portal indicated by a specific URN/URI by using a setup PDU session and perform an operation for subscribing to the TODC service. For example, the UE 1210 may check an input of user information and transmit the input user information to the authentication server 1234. Herein, the input information may include information verifying that the user of the UE 1210 is qualified to use the TODC service, for example, information related to the user's identify and a code (e.g., coupon value, serial number) issued by an operator of a corresponding network. Accordingly, the authentication server 1234 may determine that the UE 1210 is qualified to use the TODC service.

At step S1223, the UE 1210 performs a TODC service session setup procedure with the V-CN 1224 (e.g., AMF). That is, the UE 1210 configures a session for TODC service. Through the session for TODC service, data may be transmitted and received. That is, after the authentication at step S1221 is completed, information related to TODC-related service, DNN, QoS and policy is delivered, and the session for TODC service may be configured based on the delivered information.

At step S1225, the V-CN 1224 (e.g., AMF) transmits a report about a TODC service to the home network 1232 (e.g., UDM). In case authentication information of the home network is used for the TODC service or management of the home network is needed for the TODC service, a visited network reports that there is an activated TODC service. Herein, the management of the home network may be required when a restriction is imposed on the TODC service. For example, there may be a restriction associated with a time where a TODC service is available and an amount of traffic available through a TODC service. Alternatively, even when there is no restriction on a TODC service, a report about the TODC service may be transmitted for communication history management by a home network.

At step S1227, the UE 1210 performs a TODC service session release procedure with the V-CN 1224 (e.g., AMF). That is, the UE 1210 stops using a TODC service. At step S1227, the V-CN 1224 transmits a report about the TODC service to the home network 1232 (e.g., UDM). That is, a visited network notifies the home network that the use of the TODC service has been stopped. Herein, statistical information of a user may be additionally transmitted.

In the embodiment described in reference to FIG. 12, steps S1211 to S1215 are described to be performed when a TODC service is not requested during a registration procedure. However, according to another embodiment, even when steps S1211 to S1215 are performed in case a TODC service is not requested during a registration procedure, steps S1211 to S1215 may be performed. For example, in case a TODC service requested during a registration procedure is rejected, the UE 1210 may request the TODC service again through steps S1211 to S1215. As another example, after a TODC service for a first application (e.g., data service) is requested during a registration procedure, the UE 1210 may additionally request a TODC service for a second application (e.g., voice call service) through steps S1211 to S1215. Thus, the request and response of a TODC service may be repeatedly performed. Accordingly, irrespective of whether or not a TODC service is requested through a registration procedure, steps S1211 to S1215 may be repeated many times.

In the embodiment described in reference to FIG. 12, after authentication for a TODC service is performed through a TODC setup session, a session for the TODC service is configured. That is, in the case of FIG. 12, a session for configuring a TODC service and a session for the TODC service are different from each other. However, according to another embodiment, a session for configuring a TODC service and a session for the TODC service may be identical. In this case, if authentication is successful, step S1223 of configuring a session for a TODC service may be skipped. On the other hand, if authentication fails, a session for configuring the TODC service is released.

As in the above-described various embodiments, a temporary communication service may be provided. Herein, according to an embodiment, a radio resource available for providing the temporary communication service may be restricted. For example, a network may provide a non-temporary communication service at a licensed frequency and provide a temporary communication service at an unlicensed frequency. To this end, when a network, especially, a core network requests a RAN to configure a bearer, the core network may indicate which resource is to be allocated to a specific bearer, for example, whether or not an unlicensed frequency should be allocated. Accordingly, the RAN may perform configuration and scheduling of a wireless bearer and, additionally, deliver information regarding which radio resource is to be allocated for data or a logical channel of a terminal, for example, information on a logical channel where RACH/TX should be performed using an unlicensed frequency. The terminal is operated according to the information delivered from the RAN.

In the above-described various embodiments, a situation is exemplified where a temporary communication service is provided not in a home network but in a visited network. However, according to another embodiment, a home network may also provide a temporary communication service. For example, in case a user with a data quota of 5 GB uses up the SGB quota, the user may use a temporary communication service through a home network in order to request further data use through a temporary communication service.

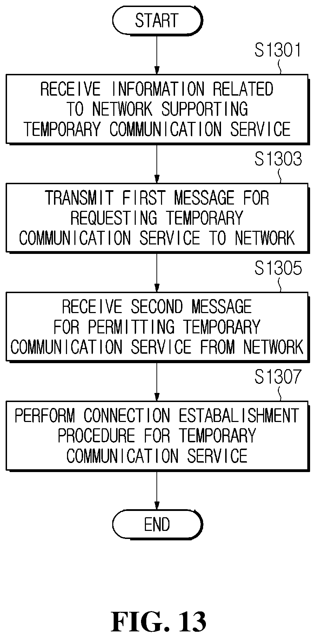

FIG. 13 illustrates an example of a procedure for using a temporary communication service in a wireless communication system according to an embodiment of the present disclosure. FIG. 13 exemplifies a method of operating a terminal (e.g., UE 1210 of FIG. 12).

Referring to FIG. 13, at step S 1301, a terminal receives information related to a network that supports a temporary communication service. The terminal may receive information on the network, which supports the temporary communication service, through system information that is transmitted by a base station. That is, the terminal may receive, from the base station, the system information including the information that supports the temporary communication service. For example, the system information may include an SIB.

Herein, although not illustrated in FIG. 13, the terminal may receive additional information for the temporary communication service. The additional information may include at least one of information related to a condition (e.g., provision of qualification-related information, subscribed home network, etc.) for using the temporary communication service, information related to a restriction (e.g., available resource, time available for using the service, application available for using the service, etc.) on the temporary communication service, and information indicating whether to be capable to provide a non-temporary communication service.

At step S1303, the terminal transmits a first message for requesting a temporary communication service to a network. The first message may be a message for requesting registration in the network or a message defined for the temporary communication service. The first message may include at least one of identification information of the terminal, information related to a home network of the terminal, information indicating that the temporary communication is requested, and information on an application to be used through the temporary communication service.

At step S1305, the terminal receives, from the network, a second message for permitting the temporary communication service. The second message may be a message for notifying permission of registration or a message defined for the temporary communication service. According to an embodiment, the second message may further include at least a part of additional information for the temporary communication service.

At step S1307, the terminal performs a connection establishment procedure for the temporary communication service. Based on additional information, the terminal performs the connection establishment procedure for the temporary communication service. According to an embodiment, the terminal may perform an operation for satisfying a condition that is designated by the additional information. For example, the terminal may access a web page designated by the additional information and transmit information that is input by a user. In addition, according to an embodiment, the terminal may establish a session according to a resource indicated by the additional information.

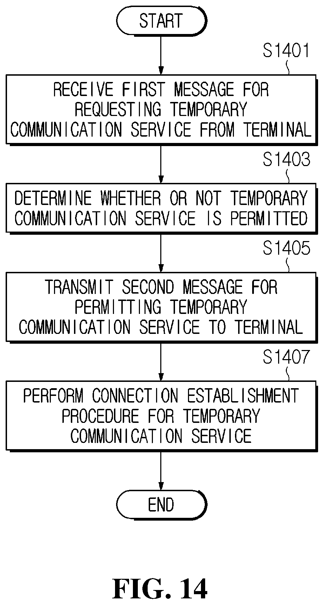

FIG. 14 illustrates an example of a procedure for providing a temporary communication service in a wireless communication system according to an embodiment of the present disclosure. FIG. 14 exemplifies an operating method of a device managing mobility (e.g., V-CN 1224 of FIG. 12, AMF).

Referring to FIG. 14, at step S1401, an AMF receives, from a terminal, a first message for requesting a temporary communication service. The first message may be a message for requesting registration in the network or a message defined for the temporary communication service. The first message may include at least one of identification information of the terminal, information related to a home network of the terminal, information indicating that the temporary communication is requested, and information on an application to be used through the temporary communication service.

At step S1403, the AMF determines whether or not a temporary communication service is permitted for the terminal. The AMF may determine whether or not the temporary communication service is permitted, by giving a query to UDM of a home network and receiving a response. Alternatively, the AMF may determine whether or not the temporary communication service is permitted, by identifying a home network to which the terminal has subscribed. In this embodiment, it is assumed that the temporary communication service is permitted.

At step S1405, the AMF transmits a second message for permitting the temporary communication service for the terminal. The second message may be a message for notifying permission of registration or a message defined for the temporary communication service. In addition, according to an embodiment, the second message may further include at least a part of additional information for the temporary communication service.

At step S1407, the AMF performs a connection establishment procedure for the temporary communication service. To this end, the AMF may check whether or not the terminal has satisfied a condition designated by the additional information. For example, the AMF may check whether or not necessary information is provided from the terminal through a web page designated by the additional information. In addition, the AMF may configure a session according to a resource indicated by the additional information. That is, the AMF may perform signaling for configuring the terminal and the session.

As in the embodiment described with reference to FIG. 14, an AMF may provide a temporary communication service to a terminal. Herein, although not illustrated in FIG. 14, in case a temporary communication service is provided, an AMF may transmit a report about the use of the temporary communication service of the terminal to UDM of a home network. For example, a report may include at least one of the start of a temporary communication service, the expiration of the temporary communication service, and statistical information (e.g., traffic amount, hours of use, etc.) associated with traffic that is used through the temporary communication service.

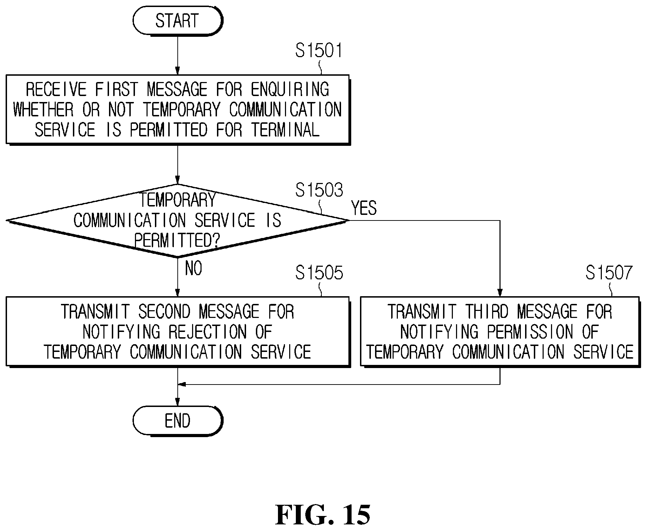

FIG. 15 illustrates an example of a procedure for managing a temporary communication service in a wireless communication system according to an embodiment of the present disclosure. FIG. 15 exemplifies a method of operating a device (e.g., the home network 1232 of FIG. 12, UDM) that manages a context.

Referring to FIG. 15, at step S1501, UDM receives a first message for enquiring a terminal whether or not a temporary communication service is permitted. The first message may be a message for identifying an SLA, a message for requesting a context patch, or a message defined for enquiring whether or not a temporary communication service is permitted. The first message may include at least one of identification information of the terminal and information on an application to be used through the temporary communication service. The first message may be received from an AMF of another operator network or an AMF of a same operator network.

At step S1503, UDM determines whether or not a temporary communication service is permitted. UDM determines whether or not a temporary communication service is permitted, based on a context of a terminal and a policy associated with the temporary communication service. For example, UDM may identify, in a context of a terminal, information indicating whether or not a temporary communication service is permitted. In case there is a restriction on a temporary communication service through a policy (e.g., a restriction on an application, a restriction on time), UDM may check whether or not a request of the first message satisfies the restriction.

If a temporary communication service is not permitted, at step S1505, UDM transmits a second message for notifying that the temporary communication service is rejected. The second message may include information indicating a cause of rejection. On the other hand, when the temporary communication service is permitted, at step S1507, UDM transmits a third message for notifying permission of the temporary communication service.

As in the embodiment described with reference to FIG. 15, UDM may provide a response concerning whether or not a temporary communication service is permitted for a terminal. Herein, although not illustrated in FIG. 15, in case a temporary communication service is permitted, UDM may receive a report about the use of the temporary communication service of the terminal. For example, a report may include at least one of the start of a temporary communication service, the expiration of the temporary communication service, and statistical information (e.g., traffic amount, hours of use, etc.) associated with traffic that is used through the temporary communication service.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### [Industrial Availability]

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a user equipment (UE) in a wireless communication system, the method comprising:
receiving information related to a network supporting a temporary communication service;
receiving additional information for the temporary communication service;
transmitting a first message for requesting the temporary communication service to the network;
receiving a second message for permitting the temporary communication service from the network; and
performing, based on the additional information, a connection establishment procedure for the temporary communication service,
wherein the temporary communication is a communication service based on a temporary subscription that occurs based on a request by the first message and expires by ending of the temporary communication service.

2. The method of claim 1, wherein the additional information includes at least one of information related to a condition for using the temporary communication service, information related to a restriction on the temporary communication service, and information notifying whether to be capable to provide a non-temporary communication service.

3. The method of claim 1, wherein the first message includes a message for requesting registration in the network or a message defined for the temporary communication service, and
wherein the first message includes at least one of identification information of the UE, information related to a home network of the UE, information indicating that the temporary communication service is requested, and information related to an application to be used through the temporary communication service.

4. The method of claim 1, wherein the performing of the connection establishment procedure comprises:
accessing a web page designated by the additional information; and
transmitting information that is input by a user on the web page.

5. The method of claim 1, wherein the performing of the connection establishment procedure comprises, setting a session at a frequency or a slice designated by the additional information.

6. A method of operating an apparatus providing an access and mobility management function (AMF) in a wireless communication system, the method comprising:
receiving a first message for requesting a temporary communication service from a terminal;
identifying that the temporary communication service is permitted for the terminal;
transmitting a second message for permitting the temporary communication service to the terminal; and
performing a connection establishment procedure for the temporary communication service,
wherein the temporary communication is a communication service based on a temporary subscription that occurs by a request of the first message and expires by ending of the temporary communication service.

7. The method of claim 6, wherein the identifying of the temporary communication service being permitted for the terminal comprises:
transmitting, to unified data management (UDM) of a home network of the terminal, a message for enquiring whether or not the temporary communication service is permitted; and
receiving a message for notifying permission of the temporary communication service.

8. The method of claim 7, wherein the performing of the connection establishment procedure for the temporary communication procedure comprises checking whether or not the terminal has satisfied a condition designated by additional information.

9. The method of claim 7, further comprising:
transmitting a report about use of the temporary communication service to the UDM of the home network of the terminal.

10. A method of operating an apparatus providing a unified data management (UDM) function in a wireless communication system, the method comprising:
receiving a first message for enquiring whether or not a temporary communication service is permitted for a terminal;
identifying that the temporary communication service is permitted; and
transmitting a second message for notifying permission of the temporary communication service,
wherein the temporary communication is a communication service based on a temporary subscription that occurs by a request of the terminal and expires by ending of the temporary communication service.

11. The method of claim 10, wherein the identifying of the temporary communication service being permitted comprises determining whether or not the temporary communication service is permitted, based on a context of the terminal and a policy associated with the temporary communication service.

12. A user equipment (UE) in a wireless communication system, comprising:
a transceiver; and
a processor coupled to the transceiver and configured to:
receive information related to a network supporting a temporary communication service,
receive additional information for the temporary communication service,
transmit a first message for requesting the temporary communication service to the network,
receive a second message for permitting the temporary communication service from the network, and
perform, based on the additional information, a connection establishment procedure for the temporary communication service, and
wherein the temporary communication is a communication service based on a temporary subscription that occurs by a request of the first message and expires by ending of the temporary communication service.

13. An apparatus providing an access and mobility management function (AMF) in a wireless communication system, the apparatus comprising:
a transceiver; and
a processor coupled to the transceiver and configured to:
receive a first message for requesting a temporary communication service from a terminal,
identify that the temporary communication service is permitted for the terminal,
transmit a second message for permitting the temporary communication service to the terminal, and
perform a connection establishment procedure for the temporary communication service, and
wherein the temporary communication is a communication service based on a temporary subscription that occurs by a request of the first message and expires by ending of the temporary communication service.

14. An apparatus providing a unified data management (UDM) in a wireless communication system, the apparatus comprising:
a transceiver; and
a processor coupled to the transceiver and configured to:
receive a first message for enquiring whether or not a temporary communication service is permitted for a terminal,
identify that the temporary communication service is permitted, and
transmit a second message for notifying permission of the temporary communication service, and
wherein the temporary communication is a communication service based on a temporary subscription that occurs by a request of the terminal and expires by ending of the temporary communication service.

15. An apparatus comprising:
at least one processor; and
at least one computer memory that is coupled to the at least one processor and stores an instruction indicating operations by being executed by the at least one processor,
wherein the operations control the apparatus to:
receive information related to a network supporting a temporary communication service,
receive additional information for the temporary communication service,
transmit a first message for requesting the temporary communication service to the network,
receive a second message for permitting the temporary communication service from the network, and
perform, based on the additional information, a connection establishment procedure for the temporary communication service, and
wherein the temporary communication is a communication service based on a temporary subscription that occurs by a request of the first message and expires by ending of the temporary communication service.

16. A non-transitory computer-readable medium storing at least one instruction, comprising the at least one instruction that is executable by a processor,
wherein the at least one instruction controls an apparatus to:
receive information related to a network supporting a temporary communication service,
receive additional information for the temporary communication service,
transmit a first message for requesting the temporary communication service to the network,
receive a second message for permitting the temporary communication service from the network, and
perform, based on the additional information, a connection establishment procedure for the temporary communication service, and
wherein the temporary communication is a communication service based on a temporary subscription that occurs by a request of the first message and expires by ending of the temporary communication service.
